**Europäisches Patentamt**

**European Patent Office**

**Office européen des brevets**

(19)

(11) Veröffentlichungsnummer: **0 215 040**
**B1**

(12) **EUROPÄISCHE PATENTSCHRIFT**

(45) Veröffentlichungstag der Patentschrift:
**05.10.88**

(51) Int. Cl.⁴: **B 23 Q 3/00**

(21) Anmeldenummer: **86901379.7**

(22) Anmeldetag: **14.02.86**

(86) Internationale Anmeldenummer:
**PCT/EP 86/00071**

(87) Internationale Veröffentlichungsnummer:
**WO 86/04849 (28.08.86** Gazette 86/19)

(54) **SICHERHEITSANSCHLAG FÜR HOLZBEARBEITUNGSMASCHINEN.**

(30) Priorität: **18.02.85 DE 3505604**
**14.03.85 DE 3509227**

(43) Veröffentlichungstag der Anmeldung:
**25.03.87 Patentblatt 87/13**

(45) Bekanntmachung des Hinweises auf die Patenterteilung:
**05.10.88 Patentblatt 88/40**

(84) Benannte Vertragsstaaten:
**AT BE CH DE FR GB IT LI LU NL SE**

(56) Entgegenhaltungen:
**CH - A - 241 972**
**CH - A - 291 579**
**CH - A - 380 356**
**CH - A - 446 693**
**CH - A - 446 694**
**DE - C - 215 911**
**GB - A - 365 831**
**US - A - 3 843 111**
**US - A - 4 304 276**

(73) Patentinhaber: **AIGNER, Georg, Thannenmais,**
**D-8386 Reisbach (DE)**

(72) Erfinder: **AIGNER, Georg, Thannenmais,**
**D-8386 Reisbach (DE)**

(74) Vertreter: **Gustorf, Gerhard, Dipl.-Ing., Patentanwalt**
**Dipl.-Ing. Gerhard Gustorf Mühlenstrasse 1,**
**D-8300 Landshut (DE)**

## Beschreibung

Die Erfindung betrifft einen Sicherheitsanschlag für Holzbearbeitungsmaschinen, insbesondere Fräsmaschinen, mit einer ersten und einer zweiten, zu beiden Seite des Werkzeuges in einer gemeinsamen Ebene angeordneten Anschlagplatte, die beide zwischen sich einen Spalt für den Durchtritt des Werkzeuges freilassen, und mit parallel zueinander verlaufenden, den Spalt überbrückenden Anschlagstäben, die in Nuten der Anschlagplatten eingreifen.

Bei bisher in der Praxis eingesetzten Sicherheitsanschlägen werden zu den beiden Anschlagplatten Anschlagstäbe bereitgehalten, die je nach der Grösse des eingesetzten Fräswerkzeuges in mehr oder weniger grossem Abstand übereinander an den beiden Anschlagplatten befestigt werden müssen. Hierzu wird in der Regel ein Innensechskantschlüssel verwendet, um die an den Stäben sitzenden Schrauben in Eingriffsschlitzen der Anschlagplatten festziehen zu können.

Als nachteilig hat sich dabei herausgestellt, dass mehrere Anschlagstäbe, die meistens unterschiedliche Höhen haben, bereitgehalten werden müssen, so dass der Handwerker genötigt ist, sie bei Bedarf dem Aufbewahrungsort zu entnehmen. Diese Praxis ist nicht nur zeitraubend und umständlich, sondern verleitet auch dazu, die Anschlagstäbe gar nicht erst einzusetzen, um die Montage nicht durchführen zu müssen. Hinzu kommt, dass für die Befestigung der Anschlagstäbe ein Werkzeug erforderlich ist. Ausserdem können die lose zur Verfügung stehenden Einzelteile verlorengehen.

Aus der DE-B-1 031 954 ist ein Sicherheitsanschlag der eingangs beschriebenen Bauart bekannt, bei dem eine Mehrzahl loser Anschlagstäbe vorhanden ist, die nach Bedarf in die Nuten der Anschlagplatten eingesteckt werden müssen. Zu diesem Zweck ist es erforderlich, die beiden Anschlagplatten voneinander zu entfernen, um dann die Stäbe in die Nuten einlegen zu können. Beim anschliessenden Zusammenfahren der beiden Anschlagplatten werden die schrägen Enden der Anschlagstäbe hinter abgeschrägten Enden von die Nuten teilweise überdeckenden Abdeckteilen eingeschlossen.

Daraus ergibt sich, dass auch dieser Sicherheitsanschlag dieselben Nachteile aufweist, die darin bestehen, dass die Stäbe nur lose zur Verfügung stehen und verlorengehen können oder oftmals zeitaufwendig gesucht werden müssen. Ausserdem kann die Breite des Spaltes zwischen den beiden Anschlagplatten für den Durchtritt des Werkzeuges nicht variiert werden, da die Spaltbreite von der Länge der Anschlagstäbe abhängt.

Der Erfindung liegt die Aufgabe zugrunde, einen Sicherheitsanschlag der angegebenen Gattung so weiterzuentwickeln, dass eine aus unverlierbaren Teilen zusammengesetzte Arbeitseinheit zur Verfügung steht, die rasch in die jeweils gewünschte Einsatzstellung gebracht werden kann.

Gemäss der Erfindung wird diese Aufgabe dadurch gelöst, dass die Anschlagstäbe in der ersten Anschlagplatte unverlierbar gelagert und in den Nuten dieser Anschlagplatte vollständig versenkbar sind und dass die jeweils benötigten Anschlagstäbe aus diesen Nuten dieser Anschlagplatte in Nuten der zweiten Anschlagplatte einführbar sind.

Diese Lösung hat den erheblichen Vorteil, dass die Anschlagstäbe fest mit einer der beiden Anschlagplatten verbunden sind, so dass es genügt, die jeweils benötigten Anschlagstäbe aus den Nuten dieser Anschlagplatte herauszuschwenken oder herauszuschieben, um sie in die Nuten der zweiten Anschlagplatte hineinzuschwenken bzw. hineinzuschieben. In der Praxis wird dabei so vorgegangen, dass der Handwerker zunächst alle Anschlagstäbe aus den Nuten der einen Anschlagplatte herausschwenkt bzw. herausschiebt, um dann durch Sichtkontrolle vor dem Werkzeug sofort zu entscheiden, welche Anschlagstäbe benötigt und welche zurückgeschwenkt bzw. zurückgeschoben werden.

In Weiterbildung der Erfindung ist die Tiefe der Nuten beider Anschlagplatten grösser als die Breite der Anschlagstäbe, so dass zwischen diesen und dem Nutgrund ein Abstand ist. Ausserdem ist es günstig, wenn das vom Werkzeug wegweisende Ende jeder Nute einen i.w. bogenförmigen zur Anschlagebene auslaufenden Nutgrund hat.

Durch den Abstand der Anschlagstäbe vom Nutgrund wird vermieden, dass Fremdkörper, die in die Nut eingedrungen sind, beispielsweise Holzspäne oder dgl., das vollständige Einsetzen der Anschlagstäbe in die Nut behindern oder unmöglich machen. Die Anschlagstäbe stehen somit weder aus den Nuten der ersten noch aus den Nuten der zweiten Anschlagplatte hervor, so dass eine nicht durch Vorsprünge unterbrochene, glatte Führungsebene an den beiden Anschlagplatten zur Verfügung steht.

Der bogenförmig zur Anschlagebene auslaufende Nutgrund erleichtert das Reinigen der Nut, etwa durch Ausblasen von eingedrungenem Holzstaub, der sich dabei nicht in Hinterschneidungen oder ähnlichen Toträumen festsetzen kann, wie sie beim Sicherheitsanschlag der DE-B-1 031 954 vorgesehen sind.

Um das Herausschwenken der Anschlagstäbe aus den Nuten der ersten Anschlagplatte zu erleichtern, ist es günstig, wenn eine Vorrichtung zum Ausschwenken der Anschlagstäbe aus den Nuten vorgesehen ist. Diese besteht vorzugsweise aus Auswurfnocken, die in jede Nut einschwenkbar sind.

Um beim Zurückschwenken der Anschlagstäbe in die zugehörigen Nuten keinen Widerstand zu haben, den die Auswurfnocken bieten, wenn vergessen wurde, diese in ihre Ausgangsstellung zurückzuschwenken, ist es von Vorteil, wenn an einem von aussen betätigbaren Drehstab, an dem alle Auswurfnocken befestigt sind, eine Rückholfeder zum Zurückschwenken der Auswurfnocken aus den Nuten angreift.

Bei den bisher bekannten Sicherheitsanschlägen ist durch die Länge der Anschlagstäbe die Öffnungsbreite des Spaltes für den Durchtritt des Werkzeuges vorgegeben. Dieser kann daher nicht verkleinert werden, was zur Folge hat, dass die Anschlagplatten nicht immer so dicht an das Werkzeug herangeführt werden können, um ein Ausreissen der Holzwerkstücke zu verhindern.

Dieser Nachteil wird bei der Erfindung dadurch vermieden, dass die Anschlagplatten gegeneinander verstellbar sind, so dass die Öffnungsbreite des Spaltes nach Bedarf eingestellt werden kann.

Um einen sicheren Sitz der Anschlagstäbe in den Nuten der Anschlagplatten zu sichern, ist in der Ober- oder Unterseite der Anschlagstäbe eine Längsrille eingearbeitet, in die beim Einschwenken oder Einschieben des Anschlagstabes in die zugeordnete Nut ein Rastelement eingreift. Da dieses Rastelement in eine Längsrille eingreift, ist bei der zweiten Anschlagplatte der Rastsitz des Anschlagstabes in dieser Nut variabel, so dass eine Relativverstellung der beiden Anschlagplatten möglich ist.

Vorzugsweise ist dabei das Restelement eine in der Nut sitzende, federbelastete Kugel. Wenn die Kugeln bei der zweiten Anschlagplatte an dem dem Werkzeug zugekehrten Ende der Nuten angeordnet sind, kann auch bei einem grösstmöglichen Spalt zwischen den beiden Anschlagplatten ein sicherer Sitz des jeweiligen Anschlagstabes in der Nut der zweiten Anschlagplatte sichergestellt werden.

Da die Anschlagstäbe in ihrer Höhe sehr klein gehalten werden können, ist es möglich, fast alle Einsatzbedingungen hinsichtlich der verwendeten Fräswerkzeuge abzudecken. Trotzdem sind Fräserhöhen und Fräserstellungen denkbar, bei denen die zur Verfügung stehenden Anschlagstäbe trotz ihrer geringen Bauhöhe in den Arbeitsbereich der Fräser ragen würden. Um auch hier Abhilfe zu schaffen, ist vorgesehen, dass jede Anschlagplatte einen stufenlos höhenverstellbaren Einsatz aufweist, in den die Nuten eingearbeitet sind. Damit können die Anschlagstäbe in Zwischenhöhen gebracht werden, falls dies erforderlich ist.

Die Einsätze sind dabei so befestigt, dass sie bei Bedarf nach vorn, also zur Bedienungsseite hin aus der Anschlagplatte herausgenommen werden können. Die entsprechenden Massnahmen ergeben sich aus den Ansprüchen 13 bis 16.

Um eine gleichmässige Höhenverstellung der beiden Einsätze zu sichern, ist jedem Einsatz eine Massskala zugeordnet, an der die Verstellung abgelesen und eingestellt werden kann.

Zur Begrenzung der Abwärtsverstellung der beiden Einsätze sind Endanschläge vorgesehen, die verhindern, dass die Einsätze mit ihrer Unterkante unter die Unterkante der Anschlagplatte verfahren werden.

Wenn nur sehr dünne Werkstücke bearbeitet werden sollen, bei denen eine sehr tiefe Fräserstellung erforderlich ist, ist es vorteilhaft, wenn der unterste Anschlagstab der aufrechtstehenden Anschlagplatten auf seiner Oberseite eine den grössten Bereich seiner Länge umfassende, seine Höhe verringernde Ausnehmung aufweist.

Da der unterste Anschlagstab in einer nach unten offenen Nut der jeweiligen Anschlagplatte sitzt, sind besondere Rastmittel erforderlich, um diesen Anschlagstab in seiner jeweiligen Stellung zu halten. Diese Rastmittel sind Gegenstand der Ansprüche 20 und 21.

Zur Befestigung an der jeweiligen Holzbearbeitungsmaschine hat jede Anschlagplatte an ihrer Rückseite ein vertikal und horizontal verstellbares Befestigungsorgan, das damit in seiner Stellung an die unterschiedlichsten Haltemittel der Holzbearbeitungsmaschine angepasst werden kann.

Vorzugsweise ist dabei in die Rückseite der Anschlagplatte eine Führungsausnehmung eingearbeitet, in die eine horizontal verschiebbare, kreisförmige Scheibe eingreift, die bei ihrer Horizontalverschiebung um ihre Kreisachse frei drehbar ist und von der exzentrisch eine Gewindebolzen oder dgl. absteht. Der Gewindebolzen dient dabei zur Klemmbefestigung der Scheibe und damit der gesamten Anschlagplatte am Haltemittel der jeweiligen Maschine mittels eines Sterngriffs o.ä.

Die Erfindung ist nachstehend an einem Ausführungsbeispiel erläutert, das in der Zeichnung dargestellt ist.

Es zeigen:

Fig. 1 eine perspektivische Darstellung eines Sicherheitsanschlages gemäss der Erfindung,

Fig. 2 eine vergrösserte Ansicht eines Anschlagstabes im ausgebauten Zustand,

Fig. 3 eine der Fig. 2 entsprechende Ansicht des untersten Anschlagstabes,

Fig. 4 eine Draufsicht der ersten Anschlagplatte mit abgenommenem Einsatz,

Fig. 5 eine Rückansicht des in Fig. 4 gezeigten Einsatzes,

Fig. 6 eine Ansicht der zweiten Anschlagplatte ohne Einsatz,

Fig. 7 eine teilweise geschnittene Vorderansicht des Einsatzes der ersten Anschlagplatte,

Fig. 8 eine perspektivische Darstellung des Endes der untersten Nut des Einsatzes der ersten Anschlagplatte,

Fig. 9 eine perspektivische Ansicht der beiden untersten Nuten des Einsatzes der zweiten Anschlagplatte,

Fig. 10 die Rückansicht der ersten Anschlagplatte und

Fig. 11 einen Querschnitt durch die erste Anschlagplatte in der Ebene XI-XI der Fig. 10.

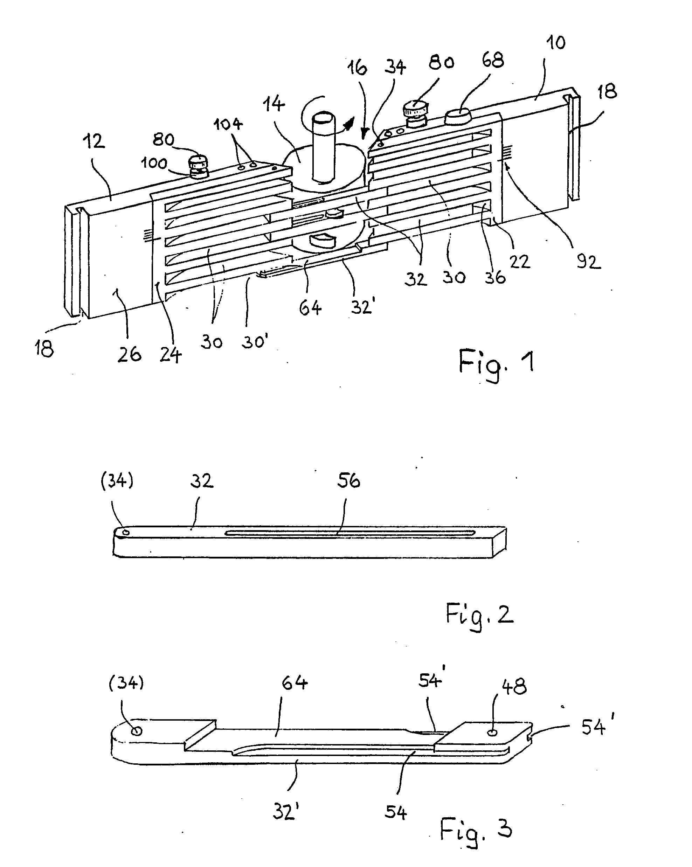

Wie Fig. 1 zeigt, sind eine erste Anschlagplatte 10 und eine zweite Anschlagplatte 12 zu beiden Seiten eines Werkzeuges 14, beispielsweise eines Fräsers einer Holzbearbeitungsmaschine, durch weiter unten erläuterte Befestigungsmittel so an der Werkzeugmaschine angebracht, dass sie in einer gemeinsamen Ebene liegen und zwischen sich einen Spalt 16 für den Durchtritt des Werkzeuges 14 freilassen. An den beiden voneinander abgekehrten Enden der aufrechtstehenden Anschlagplatten 10 und 12 sind vertikal verlaufende Klemmnuten 18 ausgebildet, in welche an sich bekannte, universelle Klemmer eingreifen können, beispielsweise Klemmer nach dem deutschen Gebrauchsmuster 82 08 234, um auf diese Weise jeweils benötigte Zusatzhilfsmittel befestigen zu können.

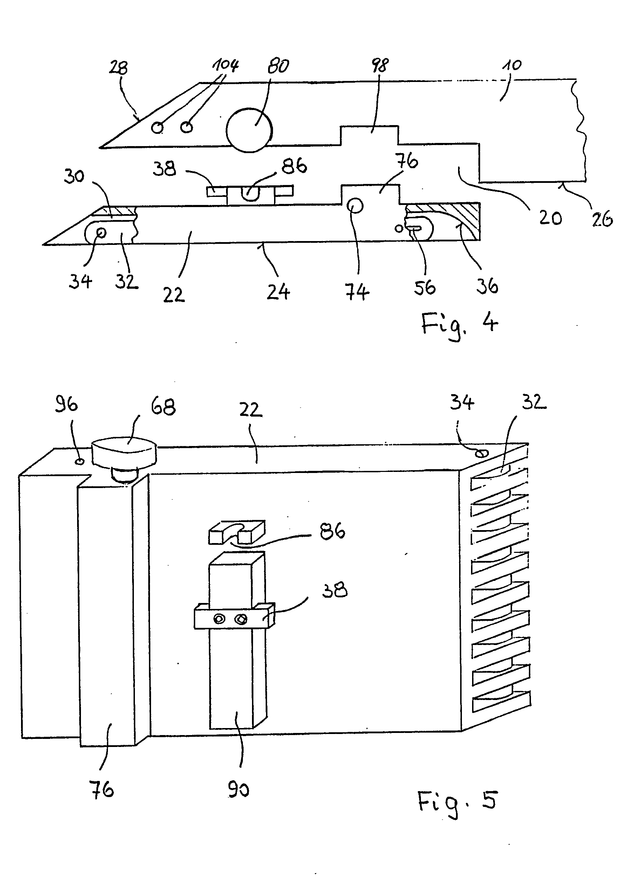

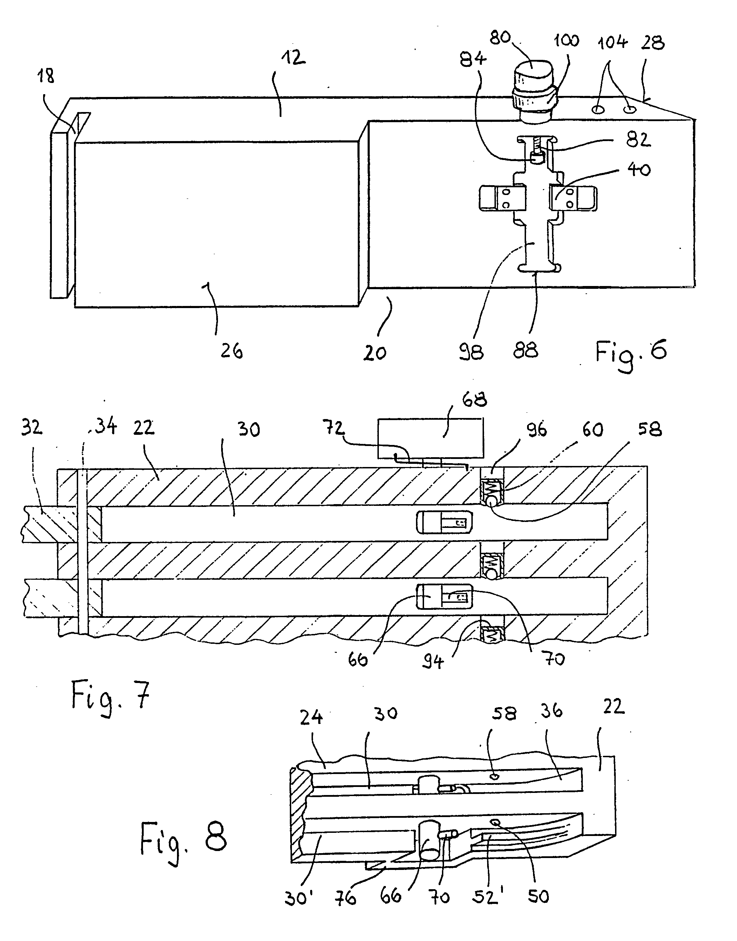

Die Fig. 1 und vor allem die Fig. 4 und 6 zeigen, dass in die Anschlagplatte 10 — und ebenso in die Anschlagplatte 12 — eine zur Vorderseite und zum Spalt 16 hin offene Aussparung 20 eingearbeitet ist, in der ein Einsatz 22 so sitzt, dass seine Vorderseite 24 mit der Vorderseite 26 der Anschlagplatte bündig ist. Auf diese Weise wird die Führungsebene der Anschlagplatte unterbrochen.

Die beiden zum Werkzeug 14 hin divergierenden Stirnseiten 28 der beiden Anschlagplatten 10 und 12 sind ebenfalls durch die jeweilige Stirnseite des Einsatzes 22 nicht unterbrochen, so dass für das im Spalt 16 stehende Werkzeug 14 ausreichend Platz ist, ohne hierzu die beiden Anschlagplatten 10 und 12 weiter als nötig auseinanderziehen zu müssen.

In jeden Einsatz 22 sind mit gleichmässigen Abständen übereinander waagrechte Nuten 30 eingearbeitet, die zur Vorderseite 24 und zum Spalt 16 hin offen sind. Die unterste Nut 30' ist ausserdem auch nach unten hin offen.

Jede Nut 30 des Einsatzes 22 der ersten Anschlagplatte 10 nimmt einen Anschlagstab 32 auf, dessen Höhe der Höhe der Nut 30 entspricht und der bündig mit der Vorderseite 24 des Einsatzes 22 abschliesst, so dass die Führungsebene der Anschlagplatte nicht unterbrochen wird. Die Anschlagstäbe 32 sind über eine gemeinsame Achse 34 in der Nähe des Spaltes 16 schwenkbar gelagert, so dass sie, wie vor allem Fig. 1 zeigt, einzeln aus den Nuten 30 heraus in die auf derselben Höhe gegenüberliegenden Nuten 30 der zweiten Anschlagplatte 12 geschwenkt werden können. Auf diese Weise überbrücken die jeweils herausgeschwenkten Anschlagstäbe 32 den Spalt 16, durch den das Werkzeug 14 für die Bearbeitung des Werkstückes hervortritt. Grundsätzlich sollten immer so viele Anschlagstäbe 32 in die Nuten 30 der zweiten Anschlagplatte 12 geschwenkt werden, dass der Spalt 16 mit Ausnahme einer Durchgriffsöffnung für das Werkzeug 14 abgedeckt ist.

Die Tiefe der Nuten 30 in den Einsätzen 22 der Anschlagplatten 10 und 12 ist etwas grösser als die Breite der Anschlagstäbe 32, so dass diese zum senkrechten Nutgrund einen Abstand haben, in den Schmutzteilchen wie Holzstaub oder dgl. ausweichen können, wenn die Anschlagstäbe 32 in die jeweilige Nut 30 eingedrückt werden (vgl. Fig. 4). Auf diese Weise wird das vollständige Versenken der Anschlagstäbe 32 in die Nuten 30 nicht behindert, und es steht immer eine vollkommen plane Anschlagfläche zur Verfügung. Um zu verhindern, dass die Anschlagstäbe 32 unter Überwindung des genannten Abstandes bis zum Nutgrund in die Nuten 30 eingedrückt werden können, sind am Nutgrund Distanzelemente vorgesehen, die um das Mass des Abstandes in die Nut 30 hineinragen, beispielsweise Teile des weiter unten beschriebenen Drehstabes 66.

Die Fig. 4, 8 und 9 zeigen, dass das vom Werkzeug 14 wegweisende Ende jeder Nut 30 einen bogenförmig auslaufenden Nutgrund 36 hat. Damit wird erreicht, dass Fremdkörper (Schmutz, Holzspäne, Holzstaub oder dgl.) leicht aus der Nut 30 entfernt werden können, beispielsweise durch Ausblasen, ohne sich an scharfen Ecken und Kanten festzusetzen.

Um einen sicheren Sitz der Anschlagstäbe 32 in den Nuten 30 zu gewährleisten, hat mit Ausnahme des in Fig. 3 dargestellten untersten Anschlagstabes 32' jeder Anschlagstab 32 an seiner Oberseite eine Längsrille 56, in die beim Einschwenken des Anschlagstabes 32 in die zugeordnete Nut 30 der ersten oder der zweiten Anschlagplatte ein Rastelement einschnappt. Wie Fig. 7 zeigt, sind die Rastelemente Kugeln 58, die von Federn 60 in die Längsrillen 56 gedrückt werden. Die Kugeln 58 sind zusammen mit ihren Federn 60 in Büchsen 94 untergebracht, die in vertikale Durchgangsbohrungen 96 der Einsätze 22 eingepresst sind.

Bei der ersten Anschlagplatte 10 befinden sich die Kugeln 58 in der Nähe des bogenförmig auslaufenden Nutendes der Nuten 30, während sie bei der zweiten Anschlagplatte 12 an dem dem Werkzeug 14 zugekehrten Ende der Nuten 30 angeordnet sind. Damit können je nach den Einsatzbedingungen unterschiedliche Öffnungsbreiten für den Spalt 16 gewählt werden, ohne dass dadurch der Rastsitz der jeweils verwendeten Anschlagstäbe 32 in der zweiten Anschlagplatte 12 gefährdet würde. Es kann dadurch eine minimale Öffnungsbreite für den Spalt 16 eingestellt werden, so dass Ausrisse beim Fräsen am Holz verhindert werden.

Zur Sicherung des untersten Anschlagstabes 32' in der auch nach unten offenen Nut 30' hat dieser in der Nähe seines freien Endes an seiner Oberseite eine federbelastete Kugel 48, die im in die unterste Nut 30' der ersten Anschlagplatte 10 zurückgeschwenkten Zustand in einen Sitz 50 einschnappt, der über der Kugel 48 und in die Nut 30' eingearbeitet ist. Zur Höhenfixierung dient dabei eine in Stablängsrichtung verlaufende Aussparung 54' im Bereich des Stabendes, die einen rippenförmigen Vorsprung 52' übergreift, der waagrecht vom Nutgrund der untersten Nut 30' absteht.

Wenn der unterste Anschlagstab 32' in die gegenüberliegende unterste Nut 30' der zweiten Anschlagplatte 12 eingeschwenkt ist, dient zu seiner Höhenfixierung ein längerer, ebenfalls rippenförmiger Vorsprung 52, der von der Rückwand dieser untersten Nut 30' in deren Längsrichtung absteht und in eine Aussparung 54 eingreift, die an der gegenüberliegenden Längsseite des untersten Anschlagstabes 32' in dessen Längsrichtung verläuft. Auf diese Weise kann die Breite des Spaltes 16 verändert werden, ohne dabei den sicheren Sitz auch des untersten Anschlagstabes 32' zu beeinträchtigen.

Der unterste Anschlagstab 32' ist in der untersten Nut 30' der zweiten Anschlagplatte 12 dadurch gesichert, dass die in der Nähe seines freien Endes aus der Oberseite herausragende Kugel 48 in eine über dieser in die unterste Nut 30' eingearbeitete Längsrille 62 einschnappt. Diese Längsrille 62 erlaubt ebenfalls eine Verstellung der beiden Anschlagplatten 10 und 12 relativ zueinander, ohne dass der unterste Anschlagstab 32' seinen Sitz in der Nut 30' der zweiten Anschlagplatte 12 verliert.

Die Fig. 1 und 3 zeigen ferner, dass der unterste Anschlagstab 32' auf seiner Oberseite eine den grössten Bereich seiner Länge umfassende Ausnehmung 64 aufweist, die seine Höhe etwa auf die Hälfte verringert. Durch diese Massnahme ist es möglich, das Werkzeug 14 so weit wie möglich nach unten zu verschieben, um auch sehr flache Werkstücke zu bearbeiten.

Im Einsatz 22 der Anschlagplatte 10 ist im spaltfernen Bereich ein vertikaler Drehstab 66 gelagert, an dessen nach oben herausragenden Ende ein Drehknopf 68 für die manuelle Betätigung befestigt ist. Auf dem Drehstab 66 ist in Höhe jeder Nut 30 ein Auswurfnocken 70 in Form eines Schraubenkopfes befestigt, der beim Drehen des Drehstabes 66 in die Nut 30 eingreift und dadurch den zugehörigen Anschlagstab 32 um die gemeinsame Achse 34 aus der Nut 30 herausschwenkt. Damit die exzentrischen Auswurfnocken 70 nach dem Herausschwenken der Anschlagstäbe 32 aus den Nuten 30 selbsttätig wieder aus dem Nutbereich herauskommen, um ein Zurückdrücken der Anschlagstäbe 32 in die Nuten 30 nicht zu behindern, greift am Drehstab 66 eine Rückholfeder 72 an, die nach Loslassen des Drehknopfes 68 den Drehstab 66 in seine Ausgangsstellung zurückdreht.

Wie die Fig. 4 und 5 zeigen, dient als Sitz für den Drehstab 66 im Einsatz 22 eine Vertikalbohrung 74, die zu einem Teil in einen Führungsblock 76 eingearbeitet ist, welcher von der Rückseite des Einsatzes 22 absteht und in eine entsprechende Führungsnut 78 der Anschlagplatte 10 bzw. 12 eingreift.

Jeder Einsatz 22 ist in der zugehörigen Anschlagplatte 10 bzw. 12 stufenlos höhenverstellbar. Zu diesem Zweck ist eine Stellschraube 80 vorgesehen, die oben aus der Anschlagplatte herausragt und mit ihrem Gewinde 82 in einer Gewindebohrung der Anschlagplatte 10 bzw. 12 verdreht werden kann. Am unteren Ende der Stellschraube 80 ist ein Kopf 84 befestigt, der in einen an der Rückseite des Einsatzes 22 ausgebildeten, zur Anschlagplatte hin offenen Sitz 86 greift und bei seiner Höhenverstellung den Einsatz 22 mitnimmt.

Der Sitz 86 ist über eine Führungssäule 90 angeordnet, die in eine vertikale Führungsausnehmung 98 der Anschlagplatte eingreift. Zu beiden Seiten der Führungssäule 90 steht von dieser mit Abstand zur Rückwand des Einsatzes 22 eine horizontale Führungsleiste 38 ab, die zwei Führungsriegel 40 in der Führungsausnehmung 98 der Anschlagplatte hintergreift (vgl. Fig. 4 bis 6).

Um zu verhindern, dass bei der Vertikalverstellung der Einsatz 22 aus der Aussparung 20 der Anschlagplatte 10 bzw. 12 nach unten herausgedrückt werden kann, hat das untere Ende der Führungsausnehmung 98 einen Endanschlag 88, gegen den das untere Ende der Führungssäule 90 in seiner untersten Stellung anschlägt.

Durch die erläuterte Halterung des Einsatzes 22 in der jeweiligen Anschlagplatte kann dieser bei Bedarf nach vorn, also zur Bedienungsseite hin ausgebaut werden.

Die Stellschraube 80 ist zu ihrer Feststellung mit einer Kontermutter 100 versehen, um eine selbständige Höhenverschiebung des jeweiligen Einsatzes 22 zu verhindern.

Zur stufenlosen Höhenverstellung des Einsatzes 22 sind selbstverständlich auch andere Konstruktionsmöglichkeiten als die der erläuterten Stellschraube 80 möglich.

Um eine gleichmässige Höhenverstellung der beiden Einsätze 22 in der ersten Anschlagplatte 10 und in der zweiten Anschlagplatte 12 sicherzustellen, ist jedem Einsatz 22 eine Massskala 92 zugeordnet.

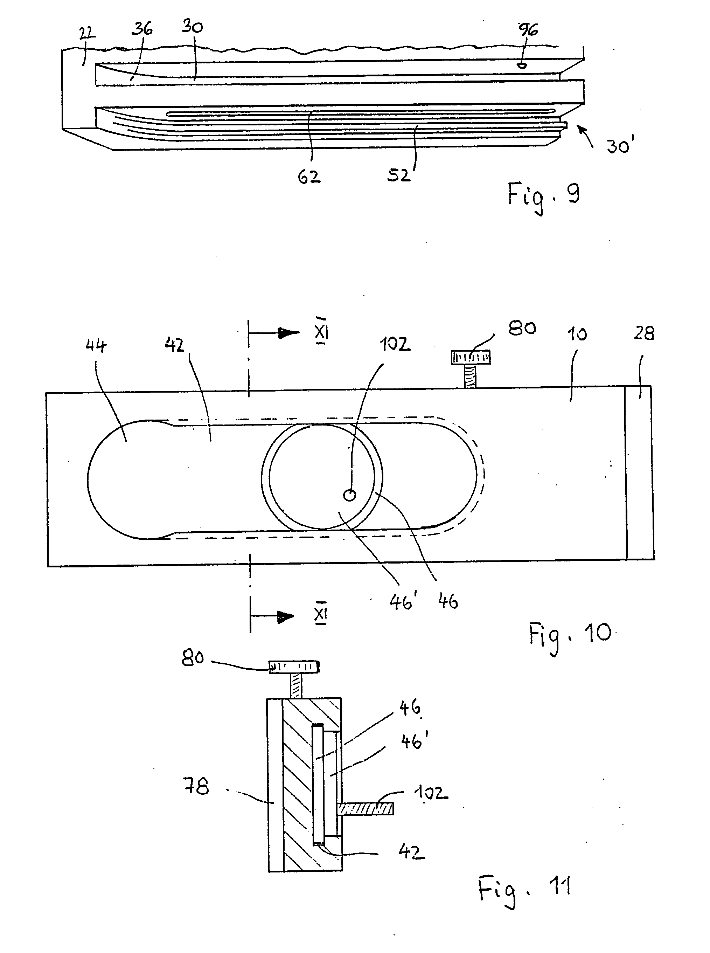

Die Fig. 10 und 11 zeigen eine universell einsetzbare Möglichkeit zur Befestigung der Anschlagplatte 10 bzw. 12 an der Holzbearbeitungsmaschine. Hierbei ist in die Rückseite der Anschlagplatte 10 — Entsprechendes gilt für die gegenüberliegende Anschlagplatte 12 — eine Führungsausnehmung 42 eingearbeitet, die sich in Längsrichtung der Anschlagplatte 10 erstreckt und kreisförmig abgerundete Enden hat. Wie Fig. 11 zeigt, sind der obere und der untere Rand der Führungsausnehmung 42 als Hinterschneidung ausgebildet, die am in Fig. 10 linken Ende der Führungsausnehmung 42 ausläuft. Auf diese Weise erweitert sich hier die Führungsausnehmung 42 zu einer kreisförmigen Einführöffnung 44. In diese Einführöffnung 44 lässt sich eine kreisförmige Scheibe 46 einsetzen, von der koaxial eine kreisförmige Scheibe 46' mit kleinerem Durchmesser, der der lichten Weite der Führungsausnehmung 42 entspricht, absteht. Wenn die Scheibe 46, 46' von der Einführöffnung 44 zum gegenüberliegenden Ende der Führungsausnehmung 42 hin bewegt wird, wobei sie um ihre Kreisachse frei gedreht wird, kann sie in jede beliebige Stellung innerhalb der Führungsausnehmung 42 verstellt werden, ohne aus dieser herauszufallen. Von der kleineren Scheibe 46' steht exzentrisch ein Gewindebolzen 102 ab, dessen Höhenlage durch Drehen der Scheibe 46 verändert werden kann.

Mit dieser Art der Befestigung lässt sich stufenlos jede gewünschte Vertikalstellung und Horizontalstellung wählen, um die Befestigung der Anschlagplatte an der Werkzeugmaschine an die dort vorhandenen Mittel anpassen zu können. Zur Fixierung dient eine nicht dargestellte Gewindemutter mit einem Sterngriff oder dgl., die auf den Gewindebolzen 102 ausgeschraubt wird und eine sichere Klemmbefestigung der Anschlagplatte an den Befestigungsmitteln der Werkzeugmaschine herstellt.

In die beiden Anschlagplatten 10 und 12 sind in der Nähe des Spaltes 16 für den Durchtritt des Werkzeuges 14 jeweils zwei vertikale Bohrungen 104 eingearbeitet, die zum Einhängen einer vorgeschriebenen Schutzabdeckung für das Werkzeug 14 dienen.

Anstelle der drehbar in der ersten Anschlagplatte 10 gelagerten Anschlagstäbe 32 ist es auch möglich, diese in ihrer Längserstreckung verschiebbar in den Nuten 30 zu führen.

Als Werkstoff für die Anschlagplatten, die Einsätze und die Anschlagstäbe kommt Metall in Frage, aber auch ein sehr fester Kunststoff, beispielsweise GFK.

**Patentansprüche**

1. Sicherheitsanschlag für Holzbearbeitungsmaschinen, insbesondere Fräsmaschinen, mit einer ersten und einer zweiten, zu beiden Seiten des Werkzeuges (14) in einer gemeinsamen Ebene angeordneten Anschlagplatte (10, 12), die beide zwischen sich einen Spalt (16) für den Durchtritt des Werkzeuges freilassen, und mit parallel zueinander verlaufenden, den Spalt überbrückenden Anschlagstäben (32), die in Nuten (30) der Anschlagplatten eingreifen, dadurch gekennzeichnet, dass die Anschlagstäbe in der ersten Anschlagplatte (10) unverlierbar gelagert und in den Nuten (30) dieser Anschlagplatte vollständig versenkbar sind und dass die jeweils benötigten Anschlagstäbe aus diesen Nuten heraus in die Nuten der zweiten Anschlagplatte (12) einführbar sind.

2. Sicherheitsanschlag nach Anspruch 1, dadurch gekennzeichnet, dass die Tiefe der Nuten (30) beider Anschlagplatten (10, 12) grösser als die Breite der Anschlagstäbe (32) ist derart, dass zwischen diesen und dem Nutgrund ein Abstand ist.

3. Sicherheitsanschlag nach Anspruch 1 oder 2, dadurch gekennzeichnet, dass das vom Werkzeug (14) wegweisende Ende jeder Nut (30) einen i.w. bogenförmig zur Anschlagebene auslaufenden Nutgrund (36) hat.

4. Sicherheitsanschlag nach einem der vorhergehenden Ansprüche, dadurch gekennzeichnet, dass eine Vorrichtung zum Ausschwenken der Anschlagstäbe (32) aus den Nuten (30) der ersten Anschlagplatte (10) in die Nuten (30) der zweiten Anschlagplatte (12) vorgesehen ist.

5. Sicherheitsanschlag nach Anspruch 4, dadurch gekennzeichnet, dass die Vorrichtung zum Ausschwenken aus Auswurfnocken (70) besteht, die in jede Nut (30) einschwenkbar sind.

6. Sicherheitsanschlag nach Anspruch 5, dadurch gekennzeichnet, dass alle Auswurfnocken (70) der Anschlagplatte (10) an einem von aussen betätigbaren Drehstab (66) befestigt sind.

7. Sicherheitsanschlag nach Anspruch 6, dadurch gekennzeichnet, dass am Drehstab (66) eine Rückholfeder (72) zum Zurückschwenken der Auswurfnocken (70) aus den Nuten (30) angreift.

8. Sicherheitsanschlag nach einem der vorhergehenden Ansprüche, dadurch gekennzeichnet, dass die Anschlagplatten (10, 12) zur Einstellung der Öffnungsbreite des Spaltes (16) zueinander verstellbar sind.

9. Sicherheitsanschlag nach einem der vorhergehenden Ansprüche, dadurch gekennzeichnet, dass in die Ober- oder Unterseite der Anschlagstäbe (32) eine Längsrille (56) eingearbeitet ist, in die beim Einsetzen des Anschlagstabes (32) in die zugeordnete Nut (30) ein Rastelement eingreift.

10. Sicherheitsanschlag nach Anspruch 9, dadurch gekennzeichnet, dass das Rastelement eine in der Nut (30) sitzende, federbelastete Kugel (58) ist.

11. Sicherheitsanschlag nach Anspruch 10, dadurch gekennzeichnet, dass die Kugeln (58) bei der zweiten Anschlagplatte (12) an dem dem Werkzeug (14) zugekehrten Ende der Nuten (30) angeordnet sind.

12. Sicherheitsanschlag nach einem der vorhergehenden Ansprüche, dadurch gekennzeichnet, dass jede Anschlagplatte (10, 12) einen stufenlos höhenverstellbaren Einsatz (22) aufweist, in den die Nuten (30) eingearbeitet sind.

13. Sicherheitsanschlag nach Anspruch 12, dadurch gekennzeichnet, dass jeder Einsatz (22) an seiner der Anschlagplatte (10, 12) zugewandten Rückseite eine Führungssäule (90) hat, die in eine vertikale Führungsausnehmung (98) der Anschlagplatte (10, 12) eingreift.

14. Sicherheitsanschlag nach Anspruch 13, dadurch gekennzeichnet, dass von der Führungssäule (90) beidseitig und mit Abstand zur Rückwand des Einsatzes (22) eine Führungsleiste (38) absteht, die zwei Führungsriegel (40) in der Führungsausnehmung (98) der Anschlagplatte (10, 12) hintergreift.

15. Sicherheitsanschlag nach einem der Ansprüche 12 bis 14, dadurch gekennzeichnet, dass zur Höhenverstellung des Einsatzes (22) an der zugehörigen Anschlagplatte (10, 12) eine Stellschraube (80) vorgesehen ist.

16. Sicherheitsanschlag nach Anspruch 15, dadurch gekennzeichnet, dass das freie Ende der Stellschraube (80) einen Kopf (86) hat, der in einen zur Anschlagplatte (10, 12) hin offenen Sitz (86) des Einsatzes (22) eingreift.

17. Sicherheitsanschlag nach einem der Ansprüche 12 bis 16, dadurch gekennzeichnet, dass zur Begrenzung der Abwärtsverstellung der beiden Einsätze (22) Endanschläge (88) vorgesehen sind.

18. Sicherheitsanschlag nach einem der Ansprüche 12 bis 17, dadurch gekennzeichnet, dass jedem Einsatz (22) eine Massskala (92) zugeordnet ist.

19. Sicherheitsanschlag nach einem der vorhergehenden Ansprüche, dadurch gekennzeichnet, dass der unterste Anschlagstab (32') der aufrechtstehenden Anschlagplatten (10, 12) auf seiner Oberseite eine den grössten Bereich seiner Länge umfassende, seine Höhe verringernde Ausnehmung (64) aufweist.

20. Sicherheitsanschlag nach einem der vorhergehenden Ansprüche, dadurch gekennzeichnet, dass die unterste Nut (30') jeder der aufrechtstehenden Anschlagplatten (10, 12) im Nutgrund einen rippenförmigen Vorsprung (52) aufweist, der in eine in Längsrichtung verlaufende Aussparung (54) an der gegenüberliegenden Längsseite des untersten Anschlagstabes (32') bei dessen Einschwenken in die unterste Nut (30') eingreift.

21. Sicherheitsanschlag nach Anspruch 19 oder 20, dadurch gekennzeichnet, dass der unterste Anschlagstab (32') in der Nähe seines freien Endes an seiner Oberseite eine federbelastete Kugel (48) aufweist, die im in die Nut (30') der ersten Anschlagplatte (10) zurückgeschwenkten Zustand in einen über der Kugel (48) in die Nut (30') eingearbeiteten Sitz (50) einschnappt, während sie im in die Nut (30') der zweiten Anschlagplatte (12) eingeschwenkten Zustand in eine über der Kugel (48) in diese Nut (30') eingearbeitete Längsrille (62) einschnappt.

22. Sicherheitsanschlag nach einem der vorhergehenden Ansprüche, dadurch gekennzeichnet, dass jede Anschlagplatte (10, 12) an ihrer Rückseite ein vertikal und horizontal verstellbares Befestigungsorgan zur Befestigung an der Holzbearbeitungsmaschine aufweist.

23. Sicherheitsanschlag nach Anspruch 22, dadurch gekennzeichnet, dass in die Rückseite der Anschlagplatte (10, 12) eine Führungsausnehmung (42) eingearbeitet ist, in die eine horizontale verschiebbare, kreisförmige Scheibe (46) eingreift, die bei der Horizontalverschiebung um ihre Kreisachse frei drehbar ist und von der exzentrisch ein Gewindebolzen (102) oder dgl. absteht.

## Claims

1. Safety stop for wood working machines, in particular milling machines, with a first and second stop plate (10, 12) arranged in a common plane at either side of the tool (14), which both leave a slot (16) between them for the passage of the tool, and with stop rods (32) running parallel to each other which bridge the slot and engage grooves (30) of the stop plates, characterized in that the stop rods are mounted in the first stop plate (10) so that they cannot be lost and can be completely inserted into the grooves (30) of this stop plate, and that the required stop rods in each case can be taken out of these grooves of the second stop plate (12).

2. Safety stop according to claim 1, characterized in that the depth of the grooves (30) of the two stop plates (10, 12) is greater than the width of the stop rods (32) so that there is a space between them and the base of the grooves.

3. Safety stop according to claim 1 or 2, characterized in that the end of each groove (30) facing away from the tool (14) has a groove base (36) which runs out towards the stop surface substantially in the form of a curve.

4. Safety stop according to one of the preceding claims, characterized in that a device is provided for swinging the stop rods (32) out of the grooves (30) of the first stop plate (10) into the grooves (30) of the second stop plate (12).

5. Safety stop according to claim 4, characterized in that the swinging out device consists of ejecting cams (70) which can be swung into each groove (30).

6. Safety stop according to claim 5, characterized in that all ejecting cams (70) of the stop plate (10) are attached to a torsion bar (66) which can be operated from outside.

7. Safety stop according to claim 6, characterized in that a return spring (72) engages on the torsion bar (66) for swinging back the ejecting cams (70) from the grooves (30).

8. Safety stop according to one of the preceding claims, characterized in that the stop plates (10, 12) are mutually adjustable for setting the opening width of the slot (16).

9. Safety stop according to one of the preceding claims, characterized in that a longitudinal groove (56) is provided in the upper or lower side of the stop rods (32) in which longitudinal groove engages a locking member when the stop rod (32) is inserted in the associated groove (30).

10. Safety stop according to claim 9, characterized in that the locking member is a spring-loaded ball (58) resting in the groove (30).

11. Safety stop according to claim 10, characterized in that the balls (58) in the second stop plate (12) are arranged on the end of the grooves (30) facing the tool (14).

12. Safety stop according to one of the preceding claims, characterized in that each stop plate (10, 12) has an insert (22) which can be continuously adjusted in height and in which the grooves (30) are formed.

13. Safety stop according to claim 12, characterized in that each insert (22) has on its rear side facing the stop plate (10, 12) a guiding pillar (90) which engages into a vertical guiding recess (98) of the stop plate (10, 12).

14. Safety stop according to claim 13, characterized in that a guide bar (38) projects to both sides of the guiding pillar (90) in spaced relationship to the rear wall of the insert (22) and engages two guiding bolts (40) in the guiding recess (98) of the stop plate (10, 12).

15. Safety stop according to one of claims 12 to 14, characterized in that an adjusting screw (80) is provided for adjusting the height of the insert (22) on the associated stop plate (10, 12).

16. Safety stop according to claim 15, characterized in that the free end of the adjusting screw (80) has a head (86) which engages into a seat (86) of the insert (22) open to the stop plate (10, 12).

17. Safety stop according to one of claims 12 to 16, characterized in that for limiting the downwards adjustment of the two inserts (22), end stops (88) are provided.

18. Safety stop according to one of claims 12 to 17, characterized in that a scale (92) is associated with each insert (22).

19. Safety stop according to one of the preceding claims, characterized in that the lowest stop rod (32') of the upright stop plates (10, 12) has on its top side a recess (64) extending over most of its length and decreasing its height.

20. Safety stop according to one of the preceding claims, characterized in that the lowest groove (30') of each upright stop plate (10, 12) has at the base of the groove a rib-shaped projection (52) which engages into a longitudinal recess (54) on the opposite longitudinal side of the lowest stop rod (32') when the latter is swung into the lowest groove (30').

21. Safety stop according to claim 19 or 20, characterized in that in the vicinity of its free end the lowest stop rod (32) has on its top side a spring-loaded ball (48) near the free end of its top side which when swung back into the groove (30') of the first stop plate (10) clips into a seat (50) provided in the groove (30') over the ball (48), whilst when swung into the groove (30') of the second stop plate (12) it clips into a longitudinal groove (62) provided over the ball (48) in this groove (30').

22. Safety stop according to one of the preceding claims, characterized in that each stop plate (10, 12) has a vertically and horizontally adjustable attachment member on its rear side for attachment to the wood working machine.

23. Safety stop according to claim 22, characterized in that a guiding recess (42) is provided in the rear side of the stop plate (10, 12) into which engages a horizontally displaceable circular disc (46) which is freely rotatable around its axis in the horizontal movement and from which a threaded bolt (102) or the like projects eccentrically.

**Revendications**

1. Butée de sécurité pour des machines à bois, notamment pour des fraiseuses ou toupies, comportant une première plaque de butée et une seconde plaque de butée (10, 12) qui sont disposées de part et d'autre de l'outil (14), dans un plan commun et définissant entre elles une fente (16) livrant passage à l'outil, et comportant également des barres de butée (32) parallèles qui traversent ladite fente de passage de l'outil et qui s'engagent dans des reinures (30) ménagées dans lesdites plaques de butée, caractérisée en ce que lesdites barres de butée (32) sont disposées de manière inamovible dans la première plaque de butée (10) et sont susceptibles d'être complètement engagées dans les rainures (30) de cette plaque de butée et en ce que chacune des barres de butée nécessaires est susceptible d'être retirée pour être engagée dans les rainures de la seconde plaque de butée (12).

2. Butée de sécurité selon la revendication 1, caractérisée en ce que la profondeur des rainures (30) des deux plaques de butée (10, 12) est supérieure à la largeur des barres de butée (32), de façon telle qu'un intervalle soit défini entre lesdites barres de butée et le fond des rainures.

3. Butée de sécurité selon la revendication 1 ou 2, caractérisée en ce que l'extrémité de chaque rainure (30), qui est dirigée à l'opposé de l'outil (14), présente un fond de rainure (36) sensiblement incurvé et orienté vers le plan de butée.

4. Butée de sécurité selon l'une des revendications précédentes, caractérisée en ce qu'il est prévu un dispositif pour faire pivoter les barres de butée (32) hors de rainures (30) de la première plaque de butée (10) de manière à les amener dans les rainures (30) de la seconde plaque de butée (12).

5. Butée de sécurité selon la revendication 4, caractérisée en ce que ledit dispositif de pivotement est constitué par des cames d'éjection (70) susceptibles d'être introduites, par pivotement, dans chaque rainure (30).

6. Butée de sécurité selon la revendication 5, caractérisée en ce que toutes les cames d'éjection (70) de la plaque de butée (10) sont fixées sur une tige tournante (66) susceptible d'être actionnée à partir de l'extérieur.

7. Butée de sécurité selon la revendication 6, caractérisée en ce qu'un ressort de rappel (72) agit sur la tige tournante (66) pour ramener, par pivotement, les cames d'éjection (70) hors des rainures (30).

8. Butée de sécurité selon une des revendications précédentes, caractérisée en ce que les plaques de butée (10, 12) sont mobiles l'une par rapport à l'autre, de manière à permettre le réglage de la largeur d'ouverture de la fente (16).

9. Butée de sécurité selon l'une des revendications précédentes, caractérisée en ce qu'est ménagée dans la face supérieure ou dans la face inférieure des barres de butée (32) une gorge longitudinale (56) dans laquelle s'engage un élément d'arrêt lors de la mise en place de la barre de butée (32) dans la rainure (30) associée.

10. Butée de sécurité selon la revendication 9, caractérisée en ce que l'élément d'arrêt est constitué par une bille (58) disposée dans la rainure (30) et sollicitée par un ressort.

11. Butée de sécurité selon la revendication 10, caractérisée en ce que les billes (58) associées à la seconde plaque de butée (12) sont disposées à l'extrémité des rainures (30) qui est dirigée vers l'outil (14).

12. Butée de sécurité selon une des revendications précédentes, caractérisée en ce que chaque plaque de butée (10, 12) comporte un élément rapporté (22) réglable en hauteur de manière continue et dans lequel les rainures (30) sont ménagées.

13. Butée de sécurité selon la revendication 12, caractérisée en ce que chaque élément rapporté (22) comporte, sur sa face arrière dirigée vers la plaque de butée (10, 12), une colonne de guidage (90) qui s'engage dans un évidement de guidage (98) de la plaque de butée (10, 12).

14. Butée de sécurité selon la revendication 13, caractérisée en ce qu'une baguette de guidage (38) s'étend, sur les deux côtés, à partir de ladite colonne de guidage (90) à une certaine distance de la face arrière de l'élément rapporté (22), cette baguette de guidage s'engageant derrière deux verrous de guidage (40) dans l'évidement de guidage précité (98) de la plaque de butée (10, 12).

15. Butée de sécurité selon une des revendications 12 à 14, caractérisée en ce qu'une vis de réglage (80) est prévue sur la plaque de butée (10, 12) associée pour permettre le réglage en hauteur dudit élément rapporté (22).

16. Butée de sécurité selon la revendication 15, caractérisée en ce que l'extrémité libre de la vis de réglage (80) comporte une tête qui s'engage dans un siège (86) de l'élément rapporté (22), ce siège étant ouvert en direction de l'une des plaques de butée (10, 12).

17. Butée de sécurité selon une des revendications 12 à 16, caractérisée en ce qu'il comporte des butées de fin de course (88) destinées à limiter la course descendante des deux éléments rapportés (22).

18. Butée de sécurité selon une des revendications 12 à 17, caractérisée en ce qu'une échelle graduée (92) est associée à chacun desdits éléments rapportés (22).

19. Butée de sécurité selon une des revendications précédentes, caractérisée en ce que la barre de butée la plus basse (32') des plaques de butée (10, 12) en position debout comporte, à sa face supérieure, sur la majeure partie de la longueur, un évidement (64) qui en diminue la hauteur.

20. Butée de sécurité selon une des revendications précédentes, caractérisée en ce que la rainure la plus basse (30') de chacune des plaques de butée (10, 12) en position debout comporte, dans le fond de rainure, une saillie (52) en forme de nervure qui s'engage dans un évidement longitudinal (54) ménagé dans la face longitudinale de la barre de butée la plus basse (32') lorsque celle-ci pivote pour s'engager dans ladite rainure la plus basse (30').

21. Butée de sécurité selon la revendication 19 ou 20, caractérisée en ce que la barre de butée la plus basse (32') comporte à proximité de son extrémité libre, et sur sa face supérieure, une bille (48) sollicitée par un ressort et s'engageant par encliquetage dans un siège (50) ménagé dans la rainure (30') de la première plaque de butée (10), au-dessus de la bille (48), lorsque la barre est amenée par pivotement dans la rainure (30') de la première plaque de butée (10), tandis que cette bille s'engage par encliquetage dans une gorge longitudinale (62) ménagée, au-dessus de la bille (48) dans la rainure (30′) de la seconde plaque de butée (12) lorsque ladite barre est engagée par pivotement dans ladite rainure (30′).

22. Butée de sécurité selon une des revendications précédentes, caractérisée en ce que chaque plaque de butée (10, 12) comporte sur sa face arrière un organe de fixation ajustable verticalement et horizontalement, qui assure la fixation sur la machine à travailler le bois.

23. Butée de sécurité selon la revendication 22, caractérisée en ce qu'un évidement de guidage (42) est ménagé dans la face arrière de la plaque de butée (10, 12), cependant qu'un disque (46) circulaire mobile horizontalement s'engage dans cet évidement et est libre de tourner autour de son axe géométrique lors du déplacement horizontal, et qu'un goujon fileté (102) ou analogue fait saillie excentriquement à partir dudit disque.

Fig. 1

Fig. 2

Fig. 3

Fig. 4

Fig. 5

18 12 80 100 104 28 84 82 40 26 20 98 88

**Fig. 6**

32 34 22 30 72 68 96 60 58 66 94 70

**Fig. 7**

24 30 58 36 22 30' 76 66 70 52' 50

**Fig. 8**

Fig. 9

Fig. 10

Fig. 11